(19) **Europäisches Patentamt / European Patent Office / Office européen des brevets**

(11) **EP 4 613 634 A1**

(12) **EUROPEAN PATENT APPLICATION**
published in accordance with Art. 153(4) EPC

(43) Date of publication:
**10.09.2025   Bulletin 2025/37**

(21) Application number: **23886231.2**

(22) Date of filing: **31.10.2023**

(51) International Patent Classification (IPC):
**B63J 3/04** *(2006.01)*    **B63H 21/17** *(2006.01)*
**H02P 9/00** *(2006.01)*    **H02M 1/10** *(2006.01)*
**H02J 7/14** *(2006.01)*    **B63J 3/00** *(2006.01)*
**H02P 101/35** *(2016.01)*

(52) Cooperative Patent Classification (CPC):
**B63H 21/17; B63J 3/00; B63J 3/04; H02J 7/14;
H02M 1/00; H02M 1/10; H02P 9/00; H02P 9/14**

(86) International application number:
**PCT/KR2023/017171**

(87) International publication number:
**WO 2024/096535 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022   KR 20220142156**

(71) Applicant: **HD Korea Shipbuilding & Offshore
Engineering
Co., Ltd.
Seongnam-si, Gyeonggi-do 13553 (KR)**

(72) Inventors:
• **PARK, Woo-Jae**
  Ulsan 44032 (KR)
• **KIM, Sang-Hyun**
  Ulsan 44032 (KR)
• **KWAK, Sang-Kyu**
  Ulsan 44032 (KR)
• **KIM, Jae-Woo**
  Ulsan 44032 (KR)

(74) Representative: **Maiwald GmbH
Engineering
Elisenhof
Elisenstrasse 3
80335 München (DE)**

(54) **POWER GENERATION DEVICE FOR DIRECT CURRENT PROPULSION SHIP, AND CONTROL METHOD THEREFOR**

(57)    The present disclosure provides a power generation device for a direct current propulsion ship, based on DC power, and a method of controlling the same, and a power generation device for a direct current propulsion ship according to an embodiment of the present disclosure includes a synchronous generator generating an AC voltage, an active front end (AFE) converter connected to an output terminal of the synchronous generator and converting the AC voltage into a DC voltage, and an automatic voltage regulator (AVR) controlling a field current to maintain flux of a stator of the synchronous generator constant, and a sensor measuring a rotation speed of the synchronous generator may be omitted.

[FIG. 3]

## Description

## Technical Field

The present disclosure relates to a power generation device for a direct current propulsion ship and a method of controlling the same.

## Background Art

Generally, an electric propulsion system including a generator may be used to produce electrical energy consumed by various electric devices such as a ship or the like.

The generated electrical energy may be used for devices necessary to supply power to various components and systems related to propulsion and operation of the ship. In addition, passengers on a passenger ship consume a huge amount of electrical energy by directly or indirectly using convenience facilities on board with electric equipment.

Producing AC power with a generator connected to a motor to supply electrical energy to a ship is a technology known within the art. The motor produces rotational motion of the generator using various energy sources such as diesel fuel, fuel oil, or the like. The produced AC power may be converted to an appropriate voltage level for different purposes.

Recently, a DC-based electric propulsion system capable of variable-speed operation of a power generation engine has been applied to address environmental issues and increase fuel efficiency.

(Patent Document 1) Korean Patent No. 10-194895

## Disclosure

## Technical Problem

The present disclosure aims to provide a power generation device for a direct current propulsion ship, utilizing an AFE converter, and a method of controlling the same.

The present disclosure aims to provide a device for fixing flux of a synchronous generator by controlling a field current, without a filter and a flux estimation sensor, using an AFE converter and an AVR in an FCR mode, and a method of controlling the same.

The purpose of the present disclosure is not limited to the problems mentioned above, and other problems not mentioned can be clearly understood by those with ordinary knowledge from the description below.

## Technical Solution

To achieve the above-mentioned purpose, the present disclosure provides a power generation device for a direct current propulsion ship, as follows:

A power generation device for a direct current propulsion ship according to an embodiment of the present disclosure includes a synchronous generator generating an alternating current (AC) voltage; and an active front end (AFE) converter connected to an output terminal of the synchronous generator and converting the AC voltage into a direct current (DC) voltage.

A method of controlling a power generation device for a direct current propulsion ship according to an embodiment of the present disclosure includes generating an alternating current (AC) voltage by a synchronous generator; and converting the AC voltage into a direct current (DC) voltage by an active front end (AFE) converter.

## Advantageous Effects of Invention

According to an embodiment of the present disclosure, flux of a synchronous generator may be fixed by controlling a field current using an AFE converter and an AVR in an FCR mode without a filter and an encoder.

## BRIEF DESCRIPTION OF DRAWINGS

FIG. 1A illustrates an example of a conventional alternating current propulsion ship.

FIG. 1B illustrates an example of a conventional direct current propulsion ship.

FIG. 2 illustrates an example of a direct current propulsion ship according to an embodiment of the present disclosure.

FIG. 3 illustrates an example of a direct current propulsion ship according to an embodiment of the present disclosure.

FIG. 4 is a configuration diagram of a system for a direct current propulsion ship according to an embodiment of the present disclosure.

FIGS. 5 to 8 are schematic configuration diagrams of a power generation device for a direct current propulsion ship according to an embodiment of the present disclosure.

FIG. 9 is a graph illustrating electrical characteristics of a power generator for ship propulsion according to an embodiment of the present disclosure, and FIG. 10 is a view illustrating a field current of a power generator for ship propulsion according to an embodiment of the present disclosure.

FIG. 11 is a view illustrating a computing environment in which a converter of a power generation device for ship propulsion according to an embodiment of the present disclosure may be implemented.

FIG. 12 is a flowchart illustrating a method of controlling a power generation device for a direct current propulsion ship according to an embodiment of the present disclosure.

**DETAILED DESCRIPTION FOR THE INVENTION**

Hereinafter, with reference to the attached drawings, preferred embodiments will be described in detail such that those with ordinary knowledge in the technical field to which the present disclosure pertains may easily carry out the present disclosure. However, when describing preferred embodiments of the present disclosure in detail, when it is determined that a specific description of a related known function or configuration may unnecessarily obscure the gist of the present disclosure, the detailed description thereof will be omitted. In addition, a portion having similar function and action may be designated by the same reference numerals throughout the drawings.

In addition, throughout the specification, when a portion is said to be 'connected' to another portion, this may include not only a case in which it is 'directly connected' but also a case in which it is 'indirectly connected' with another element therebetween. In addition, the term "including" or "comprising" a component means that other components may be included rather than excluding other components, unless specifically stated otherwise.

The present disclosure may be implemented in various different forms, and is not limited to embodiments described herein.

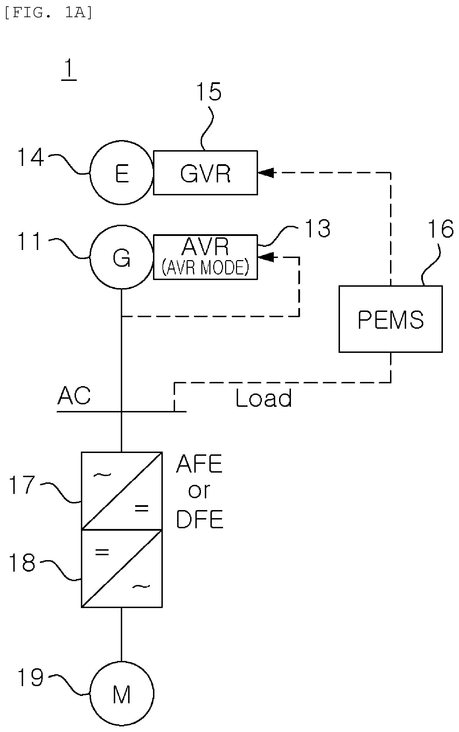

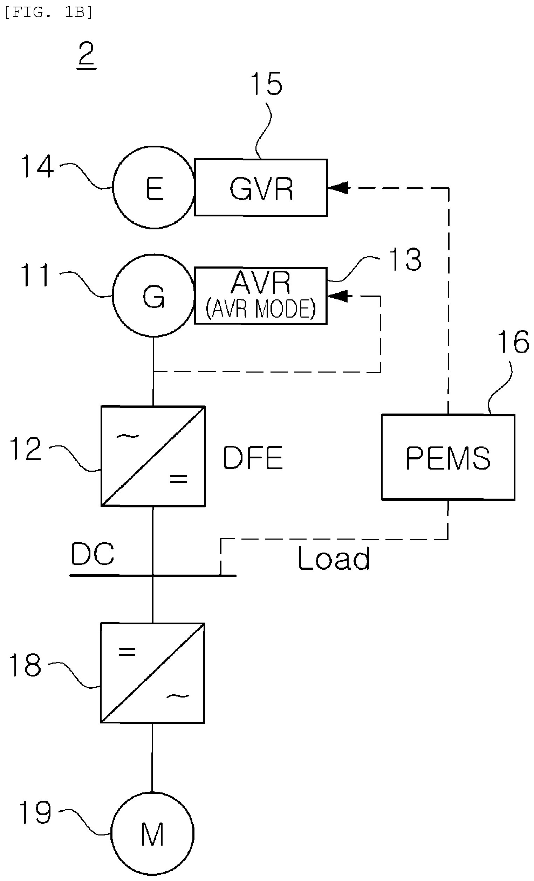

FIG. 1 illustrates examples of a power generation terminal of a conventional direct current propulsion ship.

FIG. 1A illustrates an example of a conventional alternating current propulsion ship.

Referring to FIG. 1A, a conventional alternating current (AC) propulsion ship 1 may include an engine 14, a governor (GVR) 15, a generator 11, an automatic voltage regulator (AVR) 13, a power and energy management system (PEMS) 16, a converter 17, an inverter 18, and a motor 19.

In general, since conventional ships have used an AC voltage as main power distribution, to transmit the alternating current voltage output from the generator 11 to a switch board, there was no need to use a separate converter. Therefore, the AC voltage generated from the generator 11 was directly connected to an AC switch board to supply voltage to a load terminal or a propulsion motor terminal. In this case, to increase energy efficiency, the converter (AFE or DFE) 17 converting an AC voltage to a DC voltage and the inverter 18 converting a DC voltage to an AC voltage could be used together in the propulsion motor terminal. In addition, the AVR 13 may perform a function of stabilizing voltage of AC power generated by the generator 11.

FIG. 1B illustrates an example of a conventional direct current propulsion ship.

Referring to FIG. 1B, a conventional direct current (DC) propulsion ship 2 may include a generator 11, a diode front end (DFE) converter 12, an automatic voltage regulator (AVR) 13, an engine 14, a governor (GVR) 15, an inverter 18, and a power and energy management system (PEMS) 16.

The generator 11 may generate an AC voltage, and the DFE converter 12 may convert the AC voltage generated by the generator 11 into a DC voltage. The automatic voltage regulator 13 may automatically control an unstable voltage fluctuation to supply a uniform output voltage, and may generally be used for AC voltage. The governor 15 may control a rotation speed of the engine, and the PEMS 16 may control an overall power system of the ship.

The PEMS 16 may be connected to a direct current switch board of the direct current propulsion ship 2, and may control the engine by transmitting an instruction to the governor 15 controlling the engine 14.

A converter converting AC electricity generated by the generator 11 into DC electricity may be essential for a power generation terminal 1 of a direct current propulsion ship, and the power generation terminal 1 of the conventional direct current propulsion ship has generally used the DFE converter 12.

Although the DFE converter 12 has advantages of simple circuit configuration and low price, there may be a problem that precision control is impossible because the PEMS 16 may not independently control the DFE converter 12, variable speed control of the engine and voltage control of the generator are coupled, so a control method may be complicated, and there may be a limit to DC voltage control, resulting in low system stability.

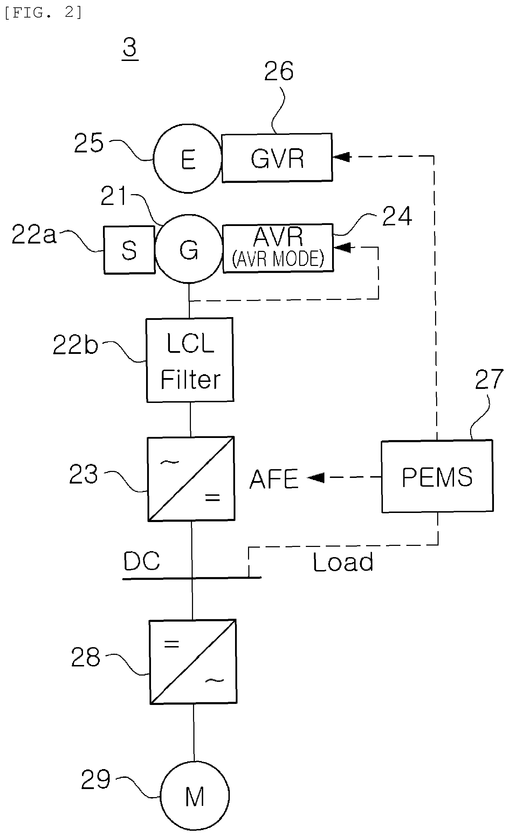

FIG. 2 illustrates an example of a power generation terminal of a direct current propulsion ship according to an embodiment of the present disclosure.

Referring to FIG. 2, an active front end (AFE) converter 23 instead of a DFE converter may be used in a direct current propulsion ship 3. Therefore, the direct current propulsion ship 3 may include a generator 21, an LCL filter 22b, an active front end (AFE) converter 23, an AVR 24, and a flux estimation sensor 22a. In addition, the direct current propulsion ship 3 may further include an engine 25, a GVR 26, and a PEMS 27.

The AFE converter 23 may control a power factor of a power generation terminal to be 1, to convert AC power into DC power, and may have an advantage of independently controlling flux and a DC voltage of the generator 21. Therefore, unlike the DFE converter 12, since variable speed control of the engine and voltage control of the generator are decoupled, a control method may be simple, and since DC voltage control is easy, system stability may be improved. In addition, as compared to the DFE converter 12, since an operation range of the generator may increase, fuel efficiency through a variable speed may be improved.

The AFE converter 23 may generate a pulse wave by a PMW switching operation, and since a control manner applied to a conventional AVR may be an automatic voltage regulator (AVR) mode and may be applied when an output voltage of the generator is a sine wave, the LCL filter 22b converting the pulse wave into a sine wave may be required.

However, when the LCL filter 22b is used, not only does a volume of the system increase, but power loss and loss due to cooling may occur. In particular, in a DC propulsion system in which efficiency improvement is expected through a variable speed of a generation engine, optimal design and control of the filter are impossible because frequency and voltage are changed according to an engine speed. Therefore, omission of the LCL filter 22b may be required.

The AFE converter 23 may require information on a rotational position and a rotation speed (RPM) of the generator (rotator) to estimate flux of a stator of the generator 21, and for this purpose, a sensor such as an encoder may be usually applied. The information on rotational position and speed of the generator obtained using the sensor may be input to the AFE converter 23, but there may be a disadvantage in that the converter switching in highfrequency range is vulnerable to noise. In addition, the system may not be operated when a cable corresponding thereto is lost. Therefore, omission of a flux estimation sensor such as an encoder may be required.

In addition, in small-sized and medium-sized ships, since a space may be narrow, it is necessary to reduce a volume of a power generation terminal by removing an encoder and a filter.

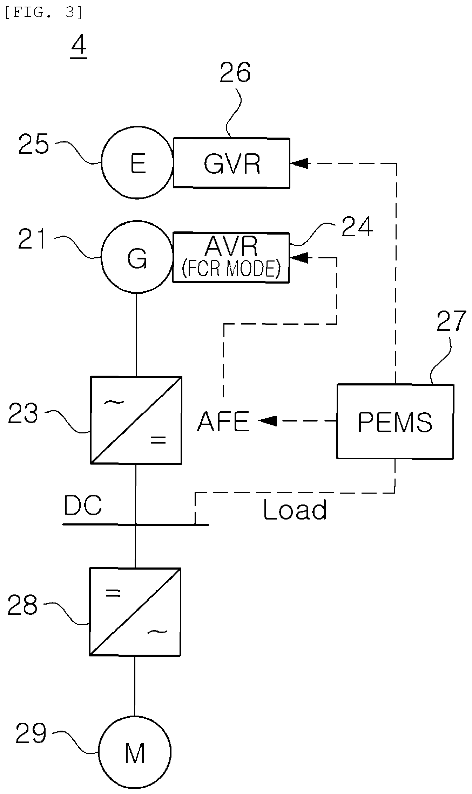

FIG. 3 illustrates an example of a direct current propulsion ship according to an embodiment of the present disclosure.

In an embodiment of the present disclosure, instead of a DEF converter having a complicated control method because variable speed control of the engine and voltage control of the generator are coupled and has a limit to DC voltage control, resulting in low system stability, an AFE converter having a simple control method because variable speed control of the engine and voltage control of the generator are decoupled, and DC voltage control is easy, may be used.

Referring to FIG. 3, a direct current propulsion ship 4 according to an embodiment of the present disclosure may omit the flux estimation sensor 22a and the LCL filter 22b of FIG. 2 because an AVR operates in a field current regulator (FCR) mode, rather than an AVR mode.

As described with reference to FIG. 2, when an AVR operates in an AVR mode, the AVR may generate a command voltage by pulse width modulation (PWM) switching of an active element, and may thus generate harmonic components due to switching. Therefore, an LCL filter 22b removing and converting noise into a sine wave may be required.

When an AVR 24 operates in a field current regulator (FCR) mode, the LCL filter 22b may be omitted because a command is calculated using a field current and transmitted to the AVR. Therefore, operating efficiency of a power generation terminal 2 of the direct current propulsion ship may be improved, and a volume of the power generation terminal may be reduced. In addition, since an AFE converter 23 estimates an angle of a rotor and flux of a stator in a generator 21 and generates a flux control signal, a sensorless type system not using an encoder may be applied. Therefore, a power generation device for a direct current propulsion ship and a method of controlling the same, which may not only less affected by noise and having no risk due to cable loss, but may also fix the flux of the generator, are proposed.

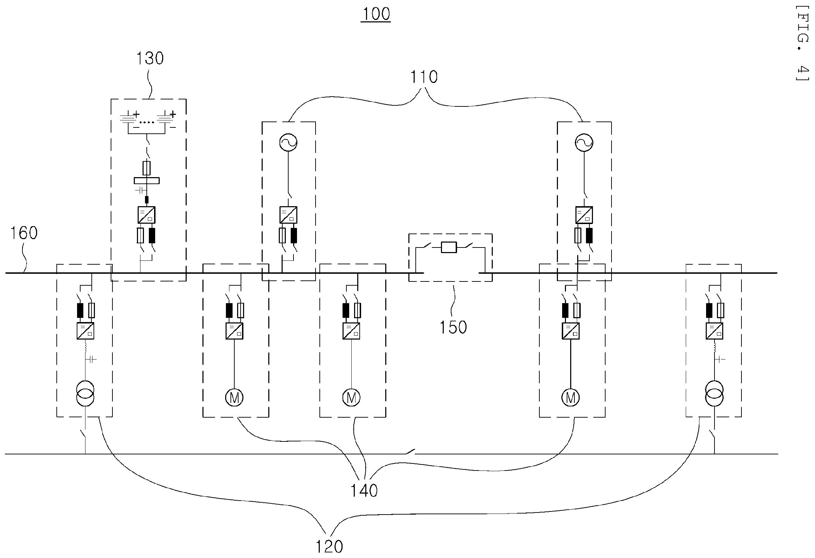

FIG. 4 is a configuration diagram of a system for a direct current propulsion ship according to an embodiment of the present disclosure.

Referring to FIG. 4, a system 100 for a direct current propulsion ship according to an embodiment of the present disclosure may include a power generation device 110 for a direct current propulsion ship, a load terminal 120, a battery system 130, a motor load terminal 140, a bus-tie 150, and a direct current switch board 160.

The power generation device 110 may generate AC power, convert the same into DC power, and supply power to a necessary component through the direct current switch board 160.

The load terminal 120 may receive DC power through the direct current switch board 160, and may perform a preset operation.

The battery system 130 may receive or provide DC power through the direct current switch board 160 to charge and discharge power.

The motor load terminal 140 may receive DC power through the direct current switch board 160, and may convert the same into AC power to drive a motor used for propulsion of a ship or the like.

The power generation device 110, the load terminal 120, the battery system 130, and the motor load terminal 140, described above, may be provided in plural, and the direct current switch board 160 may supply DC power from the power generation device 110 to the load terminal 120, the battery system 130, and the motor load terminal 140, respectively. In addition, the bus-tie 150 may be disposed between direct current switch boards 160 to block transmission of power when an abnormal condition such as breakdown or the like occurs.

Hereinafter, the present disclosure relates to a power generation device 110 for a direct current propulsion ship and a method of controlling the same, and proposes a structure and control method for utilizing an advantage of DC propulsion and efficiently performing an operation of an engine at variable speeds.

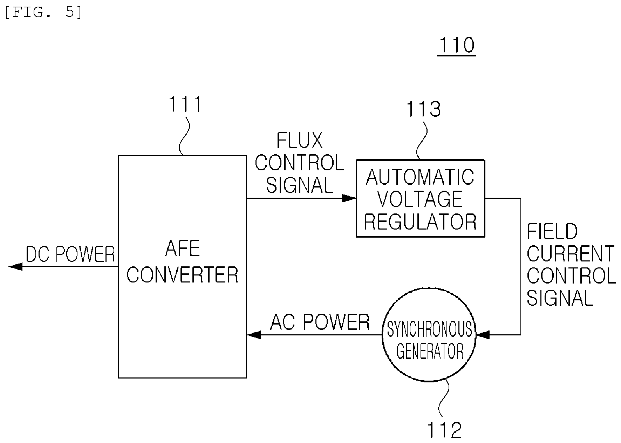

FIGS. 5 to 8 are schematic configuration diagrams of a power generation device for a direct current propulsion ship according to an embodiment of the present disclosure.

Referring to FIG. 5, a power generation device 110 for a direct current propulsion ship according to an embodiment of the present disclosure may include an AFE converter 111, a synchronous generator 112, and an automatic voltage regulator (AVR) 113. A power generation device 110 for a direct current propulsion ship according to an embodiment of the present disclosure may perform feedback-control such that voltage of a direct current switch board 160 or an output DC voltage of the AFE converter 111 is maintained constant. The AFE converter 111 may convert an AC voltage of the synchronous generator 112 into a DC voltage, and may supply the DC voltage to the direct current switch board 160, and the output DC voltage of the AFE converter 111 may be the same as a supply voltage of the direct current switch board 160. In addition, a power generation device 110 for a direct current propulsion ship according to an embodiment of the present disclosure may perform feedback-control to maintain flux of the synchronous generator 112 constant.

The AFE converter 111 may be connected to an output terminal of the synchronous generator 112, and may control a power factor to be '1,' to convert AC power output from the synchronous generator 112 into DC power. Unlike a general diode front end (DFE) type rectifier, the AFE converter 111 may independently control flux and DC power of a generator.

The AFE converter 111 of the present disclosure may estimate flux of a stator of the synchronous generator 112, and may generate a flux control signal to control the flux of the stator to be fixed, to transmit the flux control signal to the AVR 113, and the AVR 113 may control a field current of the synchronous generator 112 according to the flux control signal. The flux control signal may include a field current reference value.

According to an embodiment of the present disclosure, since the AFE converter 111 may estimate the flux and output the flux control signal, a sensor for estimating a rotation speed (rpm) of the synchronous generator may be omitted. The flux estimation sensor may include an encoder for measuring a rotation speed of a rotor of the synchronous generator.

The synchronous generator 112 may be a synchronous AC generator converting mechanical power into electrical output, and may include a stator and a rotor. The stator may have winding of an armature, and may be a portion obtaining induced electromotive force. The rotor may have winding of a field magnet, and may generate a magnetic field. In addition, in the synchronous generator 112, a rotation speed of mechanical rotation of the rotor may be equal to a rotation speed of a rotating magnetic field of the stator, and the rotation speed may be proportional to a frequency of current induced and flowing in the armature.

As an example, the synchronous generator 112 may be configured as a wound rotor synchronous generator (WRSG), and the wound rotor synchronous generator may have a form in which both a rotor and a stator are configured with three-phase windings.

The automatic voltage regulator (AVR) 113 may control a field current to control flux of the synchronous generator 112. The AVR 113 may generate a field current control signal for controlling the field current, based on the flux control signal including the field current reference value. The AVR 113 may generate the field current control signal to maintain the flux of the synchronous generator 112 constant, based on a result of estimating the flux, and the field current control signal may include the field current reference value. As a result, the flux of the stator of the synchronous generator 112 may be maintained at a constant flux, and the voltage may be controlled to be constant based thereon. The constant flux may be a preset specific value or a value within a preset range. In addition, maintaining this to be constant in the present specification or the claims may be interpreted to include maintaining it within a certain range. The AVR 113 may be configured with the same hardware as an AVR 113 used in a conventional AC power generator.

The AVR 113 may be divided into a field current regulator (FCR) mode and an automatic voltage regulator (AVR) mode according to a control method. The AVR mode may be a mode automatically controlling voltage of the generator, and the FCR mode may mean a mode manually controlling current of the generator. The AVR mode may be a mode controlling a terminal voltage of the generator, and the FCR mode may mean a mode controlling a field current of the generator. Normally, the AVR mode controlling the terminal voltage of the generator may be applied. However, in an embodiment of the present disclosure, the field current regulation (FCR) control mode that may control the field current of the generator may be applied. The AVR 113 may control the flux of the synchronous generator 112 to be constant, and may control the voltage to be constant by using the FCR control mode that may control the field current. Since the AVR 113 controls the flux using the field current as it operates in the FCR control mode, the output terminal voltage and the field current may be controlled independently.

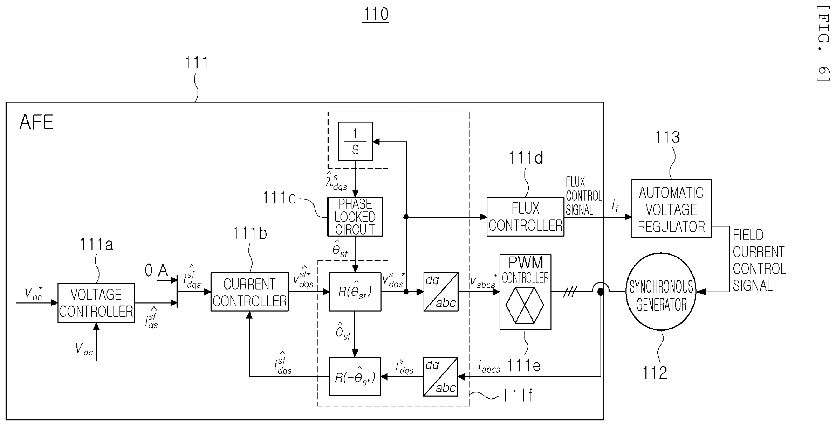

Referring to FIG. 6, an AFE converter 111 may include a voltage controller 111a, a current controller 111b, a phase locked circuit (phase locked loop, PLL) 111c, a flux controller 111d, a PWM controller 111e, and a flux estimator 111f.

The voltage controller 111a may calculate a current reference value ( $I_{qs}^{\widehat{sf}}$ ) to maintain a DC voltage of an output terminal of the AFE converter 111 at a constant voltage. The output terminal of the AFE converter 111 may mean a DC switch board (160 in FIG. 4). The current reference value ( $I_{qs}^{\widehat{sf}}$ ) may be calculated using a reference voltage ( $V_{dc}^{*}$ ) and voltage ($V_{dc}$) of the DC switch board (160 in FIG. 4). The reference voltage ( $V_{dc}^{*}$ ) may be a target voltage that the DC switch board (160 in FIG. 4) should be maintained to be constant. The current reference value ( $I_{qs}^{\widehat{sf}}$ ) may be a Q-axis current reference value of a stationary reference frame.

The current controller 111b may calculate a voltage reference value ( $V_{dqs}^{\widehat{sf}*}$ ) using a current refer-

ence value ( $I_{qs}^{\widehat{sf}}$ ) and an actual current value ( $I_{dqs}^{\widehat{sf}}$ ) of an output terminal of a synchronous generator 112. The voltage reference value ( $V_{dqs}^{\widehat{sf}*}$ ) may be a value required to control power of the DC switch board (160 in FIG. 4). The actual current value ( $I_{dqs}^{\widehat{sf}}$ ) of the output terminal of the synchronous generator 112 used in the current controller 111b may be a value converted to reflect an angle of a rotor estimated by the phase locked circuit 111c.

The phase locked circuit 111c may estimate the angle of the rotor of the synchronous generator 112. The phase locked circuit 111c may estimate the angle of the rotor using a flux estimated by the flux estimator 111f. For example, the phase locked circuit 111c may estimate the angle of the rotor by rotating an estimated flux. The phase locked circuit 111c may input an estimated angle of the rotor to the flux estimator 111f.

The flux estimator 111f may receive the voltage reference value ( $V_{dqs}^{\widehat{sf}*}$ ) from the current controller 111b. The flux estimator 111f may apply the estimated angle of the rotor by the phase locked circuit 111c to the voltage reference value ( $V_{dqs}^{\widehat{sf}*}$ ) to calculate a phase angle application voltage ( $V_{dqs}^{s*}$ ). The flux estimator 111f may convert the phase angle application voltage ( $V_{dqs}^{s*}$ ) into an abc phase, and may input a converted phase application voltage ( $V_{abc}^{*}$ ) to the PWM controller 111e.

The flux estimator 111f may estimate flux of a stator of the synchronous generator 112. The flux estimator 111f may estimate the flux using the estimated angle of the rotor by the phase locked circuit 111c. More specifically, the flux estimator 111f may calculate the flux by integrating the phase angle application voltage ( $V_{dqs}^{s*}$ ) to which the estimated angle of the rotor by the phase locked circuit 111c is applied. The flux may be a D-axis flux for a stationary reference frame of the stator of the synchronous generator 112. The flux estimator 111f may input the estimated flux to the phase locked circuit 111c and the flux controller 111d.

The flux estimator 111f may convert output current ( $I_{abc}$ ) of the synchronous generator by applying the estimated angle of the rotor by the phase locked circuit 111c, and may input the same to the current controller 111b. Therefore, the current controller 111b may calculate a voltage reference value ( $V_{dqs}^{\widehat{sf}*}$ ) in which the estimated angle of the rotor of the synchronous generator is reflected, by using an output current ( $I_{dqs}^{\widehat{sf}}$ ) of the synchronous generator to which the estimated angle of the rotor of the synchronous generator is applied.

The flux controller 111d may generate a flux control signal ($I_f$), based on the phase angle application voltage ( $V_{dqs}^{s*}$ ). The flux control signal ($I_f$) may include a reference value of a field current required to maintain the flux of the synchronous generator 112 constant. The flux control signal ($I_f$) may be a current signal. The flux controller 111d may output the flux control signal ($I_f$) including a field current reference value to the AVR 113.

The PWM controller 111e may synthesize a DC voltage using the voltage reference value output from the current controller 111b and the estimated angle of the rotor from the phase locked circuit 111c. The PWM controller 111e may convert the converted phase angle application voltage ( $V_{abc}^{*}$ ) into a DC voltage, and may output the same to the DC switch board (160 in FIG. 4).

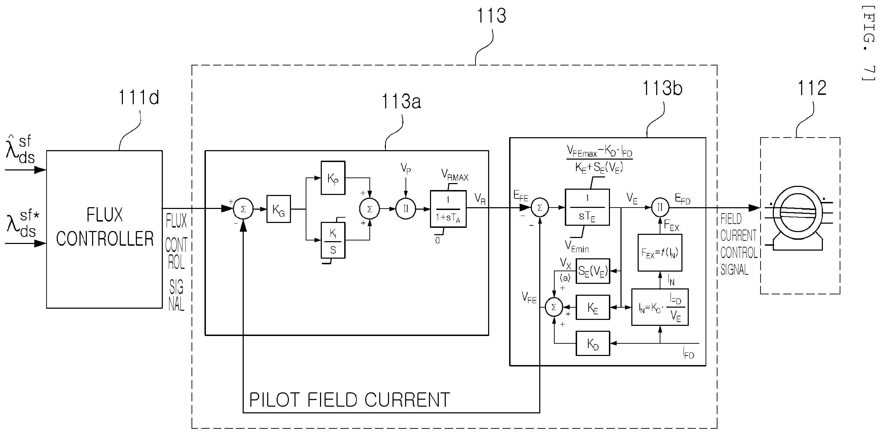

Referring to FIG. 7, an AVR 113 may include a field current regulator 113a and a pilot exciter 113b.

The field current regulator 113a may receive a flux control signal from a flux controller 111d of an AFE converter 111. The flux control signal may include a field current reference value that allows flux of a generator to be maintained at a constant flux. The field current regulator 113a may transmit the flux control signal to the pilot exciter 113b.

The pilot exciter 113b may generate a field current control signal based on the flux control signal received from the field current regulator 113a. The field current control signal may include a field current instruction value. The field current control signal may include an up/down value for controlling a field current of a synchronous generator 112. The up/down value may be a value representing a change amount of the field current. The pilot exciter 113b may output the field current control signal to the synchronous generator 112 such that flux of the synchronous generator 112 is constant.

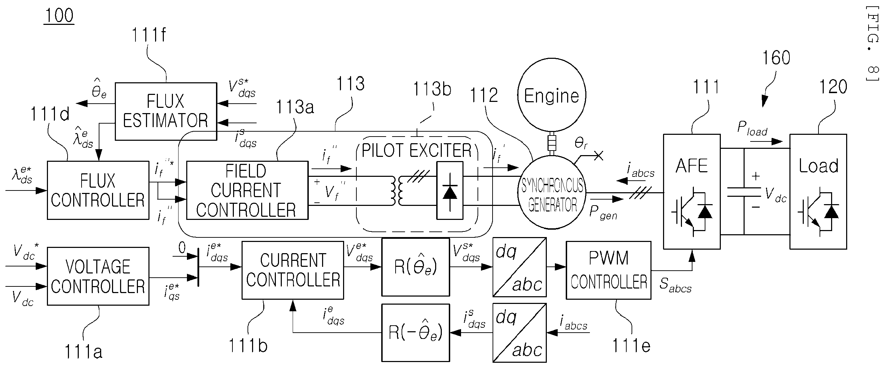

Referring to FIG. 8, a system 100 for a direct current propulsion ship according to an embodiment of the present disclosure may include the AFE converter 111, the synchronous generator 112, and the AVR 113, described in FIGS. 4 to 6, and may further include a load terminal 120 and a direct current switch board 160.

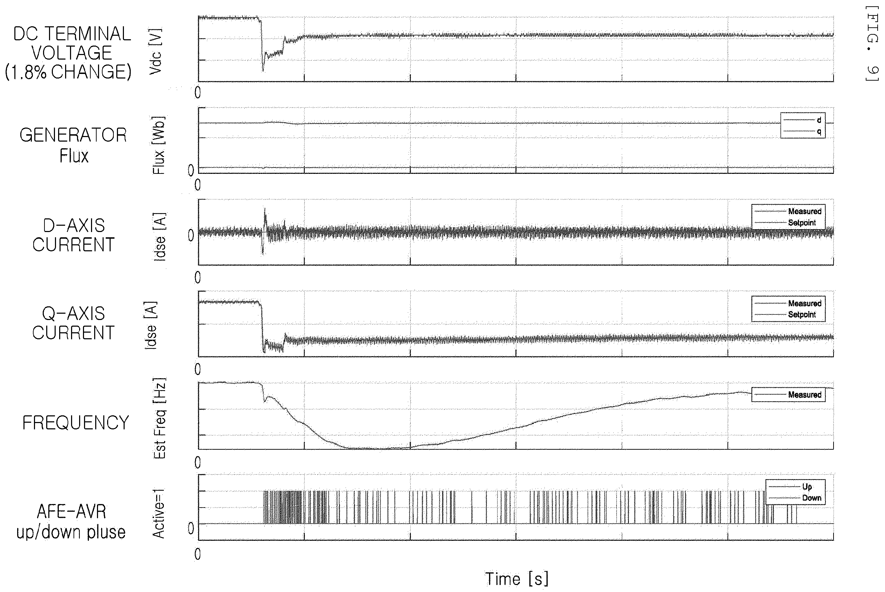

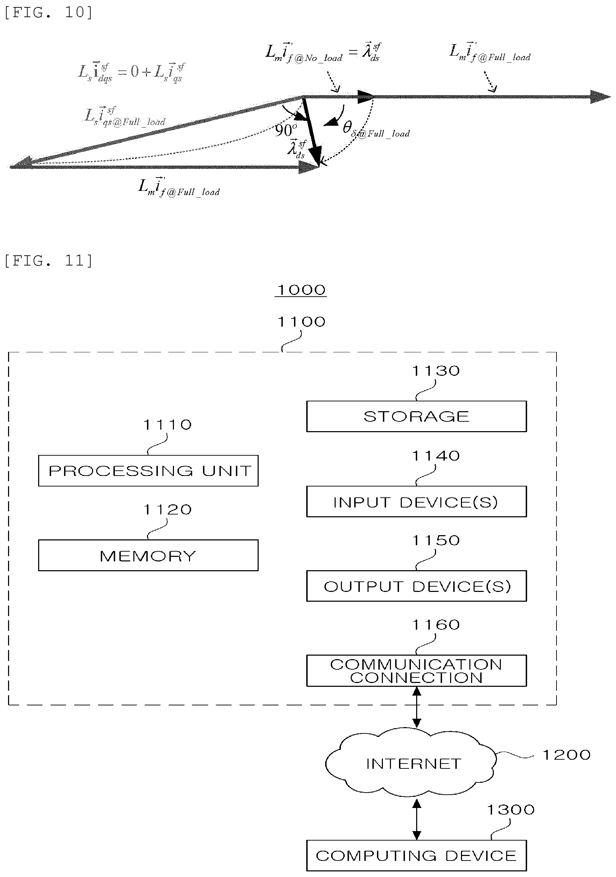

FIG. 9 is a graph illustrating electrical characteristics of a power generator for ship propulsion according to an embodiment of the present disclosure, and FIG. 10 is a view illustrating a field current of a power generator for ship propulsion according to an embodiment of the present disclosure.

Referring to FIGS. 9 and 10, together with FIG. 6, a control signal ($V^{sf}_{dqs}$) of a current controller 111b may be as the following Equation 1:

(Equation 1)

$$v_{ds}^{sf} = R_s i_{ds}^{sf} + L_s \frac{di_{ds}^{sf}}{dt} - \omega_e L_s i_{qs}^{sf}$$

$$v_{qs}^{sf} = R_s i_{qs}^{sf} + L_s \frac{di_{qs}^{sf}}{dt} + \omega_e \lambda_{ds}$$

$$= R_s i_{qs}^{sf} + L_s \frac{di_{qs}^{sf}}{dt} + V_{ph\_pk}$$

In this case, ds and qs may control a D-axis current to be '0' in a stationary reference frame, and a Q-axis current may be used to control a DC link voltage.

dsf^-qsf^, de-qe may estimate and control a flux ($\lambda^s_{dqs}$) of a stator using an estimated stator flux reference frame.

A phase locked loop (PLL) 111c may estimate an angle of a rotor of a generator, and may control a flux with an estimated angle value.

Ls may be stator leakage inductance, Lm may be mutual inductance, which may be a generator parameter constant, and a flux may be fixedly controlled by adjusting a magnitude of a field current.

FIG. 11 is a view illustrating a computing environment in which a converter of a power generation device for ship propulsion according to an embodiment of the present disclosure may be implemented.

Referring to FIG. 11, an example of a system 1000 including a computing device 1100 configured to implement one or more of the embodiments described above is illustrated. For example, the computing device 1100 may include, but is not limited to, a personal computer, a server computer, a handheld or laptop device, a mobile device (e.g., a mobile phone, a PDA, a media player, or the like), a multiprocessor system, a consumer electronic device, a minicomputer, a mainframe computer, a distributed computing environment including any of the systems or devices, or the like.

The computing device 1100 may include at least one processing unit 1110 and at least one memory 1120. In this case, the processing unit 1110 may include, for example, a central processing unit (CPU), a graphics processing unit (GPU), a microprocessor, an application specific integrated circuit (ASIC), a field programmable gate array (FPGA), or the like, and may have a plurality of cores. The memory 1120 may be a volatile memory (e.g., RAM or the like), a nonvolatile memory (e.g., ROM, flash memory, or the like), or a combination thereof.

Additionally, the computing device 1100 may include an additional storage 1130. The storage 1130 may include, but is not limited to, a magnetic storage, an optical storage, or the like. The storage 1130 may store computer-readable instructions for implementing one or more embodiments disclosed herein, and may also store other computer-readable instructions for implementing an operating system, an application program, or the like. The computer-readable instructions stored in the storage 1130 may be loaded into the memory 1120 for execution by the processing unit 1110.

Additionally, the computing device 1100 may include input device(s) 1140 and output device(s) 1150. In this case, the input device(s) 1140 may include, for example, a keyboard, a mouse, a pen, a voice input device, a touch input device, an infrared camera, a video input device, any other input device, or the like. In addition, the output device(s) 1150 may include, for example, one or more displays, speakers, printers, any other output devices, or the like. In addition, the computing device 1100 may also use input devices or output devices provided on another computing device as the input device(s) 1140 or the output device(s) 1150.

Additionally, the computing device 1100 may include communication connection(s) 1160 that enable it to communicate with another device (e.g., computing device 1300) via a network 1200. In this case, the communication connection(s) 1160 may include a modem, a network interface card (NIC), an integrated network interface, a radio frequency transmitter/receiver, an infrared port, a USB connection, or other interfaces for connecting the computing device 1100 to another computing device. In addition, the communication connection(s) 1160 may include wired or wireless connections.

Each component of the computing device 1100 described above may be connected by various interconnections such as buses (e.g., peripheral component interconnect (PCI), USB, firmware (IEEE 1394), optical bus structures, or the like) or may be connected by networks.

The terms "converter," "active front end converter," "voltage controller," "current controller," "phase locked loop (PLL)," "flux controller," "PWM controller," "peripheral circuit," and the like, as used herein, generally refer to a computer-related entity that may be hardware, a combination of hardware and software, software, or software in execution. For example, the "converter," the "active front end converter," the "voltage controller," the "current controller," the "phase locked loop (PLL)," the "flux controller," the "PWM controller," the "peripheral circuit," and the like may be, but are not limited to, processes running on a processor, processors, objects, executables, threads of execution, programs and/or computers. For example, both an application running on a controller and the controller may be components. One or more components may exist within a process and/or thread of execution, and components may be localized on one computer or distributed between two or more computers.

As described above, according to the present disclosure, it is possible to expand a variable speed range, and to stably control voltage with an transient response of, for example, ±5%, and it may be easy to secure a space of a system by excluding a filter and an encoder.

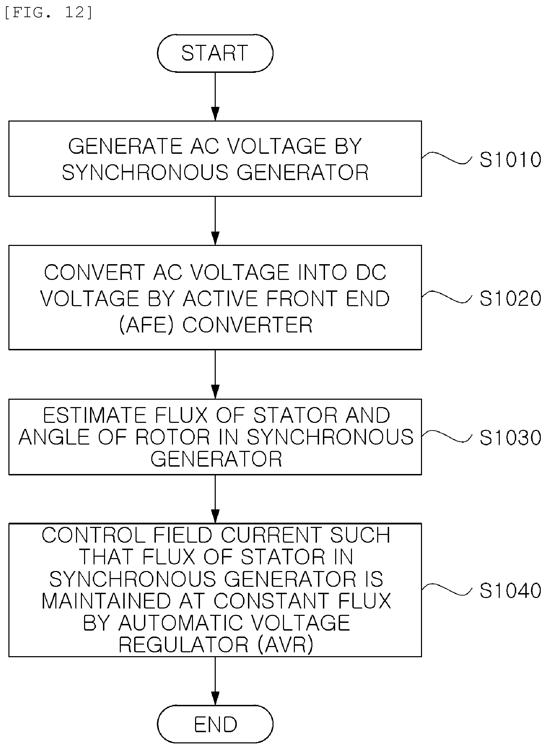

FIG. 12 is a flowchart illustrating a method of controlling a power generation device for a direct current propulsion ship according to an embodiment of the present disclosure.

Referring to FIG. 12, in S1010, a synchronous generator 112 may generate an AC voltage.

In S1020, an active front end (AFE) converter may convert the AC voltage into a DC voltage.

Also, in S1030, the AFE converter 111 may estimate flux of a stator and an angle of a rotor in the synchronous generator.

In S1040, an automatic voltage regulator (AVR) 113 may control a field current such that the flux of the stator is maintained at a constant flux, based on the flux of the stator and the angle of the rotor in the synchronous generator 112.

In addition, a method for controlling a power generation device for a direct current propulsion ship according to an embodiment of the present disclosure may include calculating a current reference value for maintaining a direct current voltage of an output terminal of the AFE converter 111 at a constant voltage by a voltage controller 111a, calculating a voltage reference value using the current reference value and a current value of an output terminal of the synchronous generator 112 by a current controller 111b, and estimating the flux of the stator of the synchronous generator 112 by a flux estimator 111f.

The controlling a field current may further include estimating the angle of the rotor of the synchronous generator 112 by a phase locked circuit 111c, generating a flux control signal including a reference field current value such that the flux of the synchronous generator 112 is maintained at a constant flux by a flux controller 111d, to transmit the flux control signal to the automatic voltage regulator (AVR) 113, and controlling the field current by the AVR 113 such that the flux of the stator of the synchronous generator 112 is maintained at a constant flux using the reference field current value.

While example embodiments have been illustrated and described above, it will be apparent to those skilled in the art that modifications and variations could be made without departing from the scope of the present disclosure as defined by the appended claims.

**Claims**

1. A power generation device for a direct current propulsion ship, comprising:

   a synchronous generator generating an alternating current (AC) voltage; and
   an active front end (AFE) converter connected to an output terminal of the synchronous generator and converting the AC voltage into a direct current (DC) voltage.

2. The power generation device of claim 1, further including an automatic voltage regulator (AVR) feedback-controlling a field current to maintain flux of the synchronous generator or an output DC voltage of the AFE converter constant.

3. The power generation device of claim 1, wherein the AFE converter includes:

   a flux estimator estimating flux of a stator of the synchronous generator; and
   a phase locked loop (PLL) estimating an angle of a rotor of the synchronous generator, based on the estimated flux of the stator.

4. The power generation device of claim 3, wherein the AFE converter includes:

   a voltage controller calculating a current reference value necessary to maintain a DC voltage of an output terminal of the AFE converter at a constant voltage; and
   a current controller calculating a voltage reference value using the current reference value and a current value of the output terminal of the synchronous generator.

5. The power generation device of claim 4, wherein the flux estimator applies the estimated angle of the rotor to the voltage reference value to calculate a phase angle application voltage, and integrates the calculated phase angle application voltage to estimate a flux.

6. The power generation device of claim 5, wherein the AFE converter further includes a PWM controller converting an AC voltage into a DC voltage and outputting the converted DC voltage, and
   the flux estimator converts the phase angle application voltage into an abc phase and outputs the converted abc phase to the PWM controller.

7. The power generation device of claim 3, wherein the AFE converter further includes a flux controller, and the flux controller generates a flux control signal including a reference field current value, based on the estimated flux of the stator, and transmits the flux control signal to the AVR.

8. The power generation device of claim 7, wherein the AVR generates a field current control signal controlling a field current, based on the flux control signal, and outputs the field current control signal to the synchronous generator.

**9.** The power generation device of claim 8, wherein the field current control signal includes an up/down signal controlling field current.

**10.** The power generation device of claim 1, wherein the synchronous generator is composed of a wound AC synchronous generator.

**11.** A method of controlling a power generation device for a direct current propulsion ship, including:

generating an alternating current (AC) voltage by a synchronous generator;
converting the AC voltage into a direct current (DC) voltage by an active front end (AFE) converter; and
feedback-controlling a field current by an automatic voltage regulator (AVR) to maintain flux of the synchronous generator or an output DC voltage of the AFE converter constant.

**12.** The method of claim 11, further including:

estimating flux of a stator of the synchronous generator by the AFE converter; and
estimating an angle of a rotor of the synchronous generator, based on the estimated flux of the stator by the AFE converter.

**13.** The method of claim 12, further including:

calculating a current reference value necessary to maintain a DC voltage of an output terminal of the AFE converter at a constant voltage by the AFE converter; and
calculating a voltage reference value using the current reference value and a current value of an output terminal of the synchronous generator by the AFE converter.

**14.** The method of claim 13, wherein the estimating a flux includes:

applying the estimated angle of the rotor to the voltage reference value to calculate a phase angle application voltage; and
integrating the calculated phase angle application voltage to estimate the flux.

**15.** The method of claim 12, further including:

generating a flux control signal including a reference field current value, based on the estimated flux of the stator, by the AFE converter; and
transmitting the flux control signal to the AVR by the AFE converter.

[FIG. 1A]

[FIG. 1B]

<u>2</u>

[FIG. 2]

<u>3</u>

[FIG. 3]

<u>4</u>

[FIG. 4]

[FIG. 5]

[FIG. 6]

[FIG. 7]

[FIG. 8]

[FIG. 9]

[FIG. 10]

$$L_s \vec{\mathbf{i}}_{dqs}^{sf} = 0 + L_s \vec{\mathbf{i}}_{qs}^{sf}$$

$$L_m \vec{\mathbf{i}}_{f@No\_load}^{'} = \vec{\lambda}_{ds}^{sf}$$

$$L_m \vec{\mathbf{i}}_{f@Full\_load}^{'}$$

$$L_s \vec{\mathbf{i}}_{qs@Full\_load}^{sf}$$

$90°$

$\theta_{\delta@Full\_load}$

$\vec{\lambda}_{ds}^{sf}$

$$L_m \vec{\mathbf{i}}_{f@Full\_load}^{'}$$

[FIG. 11]

<u>1000</u>

1100

1110 — PROCESSING UNIT

1120 — MEMORY

1130 — STORAGE

1140 — INPUT DEVICE(S)

1150 — OUTPUT DEVICE(S)

1160 — COMMUNICATION CONNECTION

INTERNET — 1200

COMPUTING DEVICE — 1300

20

[FIG. 12]

```
        ( START )
            │
            ▼
┌───────────────────────────────┐
│   GENERATE AC VOLTAGE BY       │ ── S1010
│   SYNCHRONOUS GENERATOR        │
└───────────────────────────────┘
            │
            ▼
┌───────────────────────────────┐
│  CONVERT AC VOLTAGE INTO DC    │ ── S1020
│  VOLTAGE BY ACTIVE FRONT END   │
│  (AFE) CONVERTER               │
└───────────────────────────────┘
            │
            ▼
┌───────────────────────────────┐
│  ESTIMATE FLUX OF STATOR AND   │ ── S1030
│  ANGLE OF ROTOR IN SYNCHRONOUS │
│  GENERATOR                     │
└───────────────────────────────┘
            │
            ▼
┌───────────────────────────────┐
│  CONTROL FIELD CURRENT SUCH    │
│  THAT FLUX OF STATOR IN        │
│  SYNCHRONOUS GENERATOR IS      │ ── S1040
│  MAINTAINED AT CONSTANT FLUX   │
│  BY AUTOMATIC VOLTAGE          │
│  REGULATOR (AVR)               │
└───────────────────────────────┘
            │
            ▼
         ( END )
```

## INTERNATIONAL SEARCH REPORT

| International application No. |
| --- |
| **PCT/KR2023/017171** |

| A. | CLASSIFICATION OF SUBJECT MATTER |
| --- | --- |

**B63J 3/04**(2006.01)i; **B63H 21/17**(2006.01)i; **H02P 9/00**(2006.01)i; **H02M 1/10**(2006.01)i; **H02J 7/14**(2006.01)i; **B63J 3/00**(2006.01)i; **H02P 101/35**(2015.01)i

According to International Patent Classification (IPC) or to both national classification and IPC

| B. | FIELDS SEARCHED |
| --- | --- |

Minimum documentation searched (classification system followed by classification symbols)

B63J 3/04(2006.01); G06F 7/00(2006.01); H02M 1/32(2007.01); H02P 21/00(2006.01); H02P 27/04(2006.01); H02P 3/14(2006.01); H02P 9/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 컨버터(converter), 제어(control), 전압 조정기(voltage regulator), 발전기(generator)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2022-0120147 A (HYUNDAI ELECTRIC & ENERGY SYSTEMS CO., LTD.) 30 August 2022 (2022-08-30)<br>See paragraphs [0012]-[0025] and figures 1-2. | 1-2,10-11 |
| Y | | 3,7-9,12,15 |
| A | | 4-6,13-14 |
| Y | 김민호 등. 고정자 자속 추정과 PLL을 이용한 동기모터의 센서리스 속도 제어.<br>반도체디스플레이기술학회지. vol. 14, no. 2, 30 June 2015, pp. 35-40 (KIM, Min Ho et al. Sensorless Speed Control of PMSM using Stator Flux Estimation and PLL. Journal of the Semiconductor & Display Technology.)<br>See page 39. | 3,12,15 |
| Y | KR 10-2014-0009021 A (YOON, Sang Eock) 22 January 2014 (2014-01-22)<br>See paragraphs [0039]-[0040] and [0045]-[0048]. | 7-9,15 |

✓ Further documents are listed in the continuation of Box C.　　✓ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **06 February 2024** | **07 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 613 634 A1**

**INTERNATIONAL SEARCH REPORT**

International application No.

**PCT/KR2023/017171**

### C. DOCUMENTS CONSIDERED TO BE RELEVANT

| Category* | Citation of document, with indication, where appropriate, of the relevant passages | Relevant to claim No. |
|---|---|---|
| A | JP 2015-122928 A (PANASONIC IP MANAGEMENT CORP.) 02 July 2015 (2015-07-02)<br>See claim 1 and figure 3. | 1-15 |
| A | US 2012-0158245 A1 (YOSHIZAWA et al.) 21 June 2012 (2012-06-21)<br>See paragraphs [0026]-[0038] and figure 1. | 1-15 |

Form PCT/ISA/210 (second sheet) (July 2022)

23

**INTERNATIONAL SEARCH REPORT**
Information on patent family members

| International application No. |
| --- |
| **PCT/KR2023/017171** |

| Patent document cited in search report | | | Publication date (day/month/year) | Patent family member(s) | | | Publication date (day/month/year) |
| --- | --- | --- | --- | --- | --- | --- | --- |
| KR | 10-2022-0120147 | A | 30 August 2022 | KR | 10-2465166 | B1 | 09 November 2022 |
| KR | 10-2014-0009021 | A | 22 January 2014 | KR | 10-1478771 | B1 | 05 January 2015 |
| JP | 2015-122928 | A | 02 July 2015 | JP | 6206767 | B2 | 04 October 2017 |
| US | 2012-0158245 | A1 | 21 June 2012 | CN | 102549876 | A | 04 July 2012 |
| | | | | CN | 102549876 | B | 31 December 2014 |
| | | | | EP | 2472702 | A1 | 04 July 2012 |
| | | | | EP | 2472702 | B1 | 02 August 2017 |
| | | | | JP | 5460727 | B2 | 02 April 2014 |
| | | | | US | 8437910 | B2 | 07 May 2013 |
| | | | | WO | 2011-046147 | A1 | 21 April 2011 |

Form PCT/ISA/210 (patent family annex) (July 2022)

**REFERENCES CITED IN THE DESCRIPTION**

**Patent documents cited in the description**

- KR 10194895